# EUROPEAN PATENT APPLICATION

(11) **EP 1 428 797 A1**
(43) Date of publication of application: **16.06.2004**
(21) Application number: 03468007.4
(22) Date of filing: 12.09.2003
(51) Int. Cl.: C02F 1/48

(54) **Water revitalizer**

(30) Priority: 12.09.2002 SI 200200222
(71) Applicant: Poznik Vili, 3000 Celje (SI); Ara Zalozba d.o.o., 1000 Ljubljana (SI)
(72) Inventor: Poznik Vili, 3000 Celje (SI); Ara Zalozba d.o.o., 1000 Ljubljana (SI)
(74) Representative: Flak, Antonija

(57) **Abstract**

The water vitalizer according to the invention revitalizes the tap water by swirling the water flow, directed from the existing water line through the said water vitalizer, by submitting the water to magnetic field, and by imprinting special information into the water by a generator consisting of two symbolic pictograms. The water is guided through the inlet pipe (13) to the inner tube (9) where the water flow is swirled initially in the first right-swirling screw (1) and then in a left-swirling screw (2). Between the swirling screws (1, 2), a special information is imprinted into the water by an information generator (16), which is attached on the cylinder (10), embracing the inner tube (9). Before the water is returned back to the water line, it is swirled once more in the right-swirling screw (3). In all three swirling screws (1, 2, 3), the water flows through a magnetic field created by the permanent magnets (6, 7, 8) inserted in closed cylinders (21) of the swirling screws (1, 2, 3). Owing to specific combination of physical, magnetic, and information effects, the clusters and long macromolecules are split into smaller macromolecules and the surface tension is reduced, which together renders better physiological properties to the water.

## Description

The invention relates to devices for improving the quality of drinking water and wastewater.

The technical problem solved by the present invention is a design and construction of a fluid revitalizing device, in particular water revitalizing device, based entirely upon natural laws and using exclusively natural materials, the said device making the water physiologically more suitable for the organism by breaking down its macromolecules and reducing its surface tension. The water processed in such a way passes more easily through the cell membrane and dilutes better the ballast substances in the cells therefore, smaller amount of water is necessary to ensure proper biological functions in the cells. Consequently, smaller intake of fluid is needed therefore functioning of lever, kidney, and heart is facilitated.

### Background art and citation of relevant documents

The majority of population in towns as well as in villages uses tap water for their own needs as well as in agriculture and stockbreeding. The quality of tap water varies depending upon the location and upon natural water sources available. However, due to its composition the tap water only partly accomplishes its biological function in the life of humans, animals and plants. Even where the quality of tap water is suitable as regards its chemical and bacteriological characteristics, it still may be inadequate as far as health is concerned, because it generally consists of macromolecules joined into clusters, linked further into quasi-crystal structures or into very long macromolecules. Due to their size and/or longitude, the macromolecules cannot pass through the cell membrane and consequently some amount of water is often excreted without being utilized in full. As a result, larger amounts of water should be taken in, charging harder the vital organs, i.e. heart, liver, and kidney. Besides, due to very low redox potential of positive and negative ions, the tap water exhibits a low separation capability of oxygen therefore insufficient amount of oxygen is delivered to cells. Heavy metals and minerals contained in the tap water represent yet another drawback. Due to low number of ions and/or weak ionic bonds, they become free to accumulate in kidneys where they crystallize into kidney sand or stones. Larger amounts of water must be taken in to enable basic physiological reactions requiring water, resulting in overload of kidneys and hence higher blood pressure. All of the drawbacks of the tap water presented above lead to the conclusion that the organism needs healthy natural source water, containing inherently "live" shorter macromolecules, or suitably processed tap water in which the clusters and quasi-crystals are cracked and long macromolecules are split up.

From the Slovenian patent No. 9200214, water processing device and method are known, which change the quality of drinking water or wastewater mechanically and under pressure higher than the atmospheric pressure. Water quality is improved only partly as the macromolecule clusters are not reduced, therefore, a complete absorption of water by the organism is not possible.

Another device and method for purifying and vitalizing of fluids, in particular water, is described in the Slovene patent No. 20422. The said device enables mechanical and chemical filtration of water and in addition improves the quality of water or fluid by means of some specific methods. The water or fluid processed in the said device is better, however the desired solution of the problem presented earlier is not achieved.

### Description of the invention

The essential feature of the device according to the invention is in that the water flow is swirled and guided through a magnetic field, initially in a first right-swirling screw and its magnet, then in a left-swirling screw and its magnet and finally in a second right-swirling screw and its magnet, and that in addition special information is imprinted into the water when it passes by an information generator consisting of two special symbolic pictograms. Owing to specific combination of physical, magnetic, and information effects, the clusters and long macromolecules are split into smaller macromolecules and the surface tension is reduced which together renders better physiological properties to the water.

The water vitalizer, which is the subject of the present invention, is explained in detail by means of the following drawings showing:

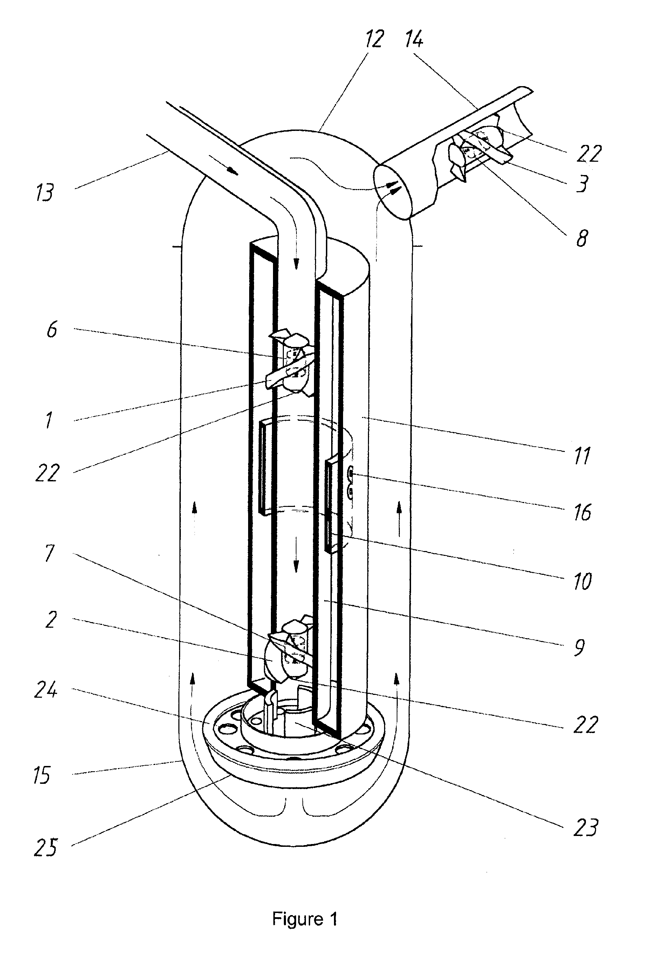

Figure 1 - a cross-section view of the water vitalizer

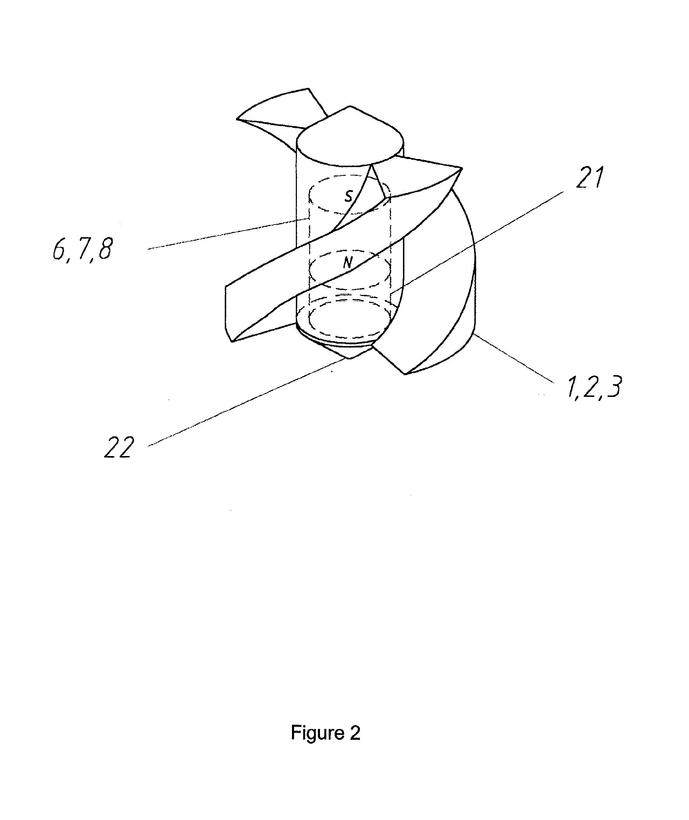

Figure 2 - swirling screw 1, 2, 3

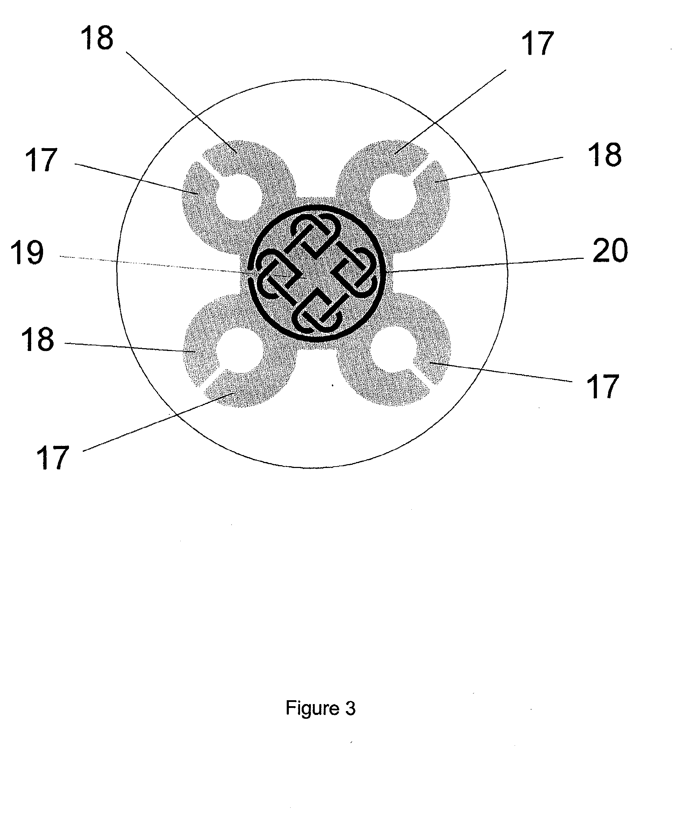

Figure 3 - generator 16

The water vitalizer according to invention is built in a cylindrical case 15 with a cover 12, the said cover 12 and case 15 being joined with a thread, and has an inlet pipe 13 and an outlet pipe 14. The inlet pipe 13 guides the water into the inner tube 9, having a right-swirling screw 1 positioned at its entry and a left-swirling screw 2 positioned at its exit. Another right-swirling screw 3 is positioned in the outlet pipe 14. In closed cylinders 21 of the swirling screws 1, 2, 3, the permanent magnets 6, 7, 8 are built-in, having their N pole turned towards the cone shaped cover 22. On a cylinder 10, which is positioned between the inner tube 9 and the outer tube 11 and which embraces the mid part of the inner tube 9, a generator 16 is attached, consisting of two symbolic symmetrical figures, which have their axis of symmetry positioned at an angle of 45°. The first figure is a circle plane with four pairs of arcs positioned uniformly around its edge so, that the four right bended arcs 17 represent a right-swirling Archimedes screw and the four left bended arcs 18 represent a left-swirling Archimedes screw. The second figure is an archetypic symbol 19 comprising four interlaced hearts positioned so as to form a cross within an interrupted ring 20. The water flows out of the inner tube 9 through a funnel 24, which is inserted into the inner tube 9 by means of its cylindrical neck 23 with three longitudinal rectangular cuttings, the funnel 24 having a shape of a saucer with several round holes uniformly arranged in a circle on its bottom. After passing the funnel 24, the water flows back towards the outlet pipe 14, where the water swirls in the right-swirling screw 3 and flows through the magnetic field of its magnet 8.
The water vitalizer is installed into existing water supply line by means of nuts, which fix the inlet pipe 13 and the outlet pipe 14 to a selected water pipe.

## Claims

1. A water vitalizer for installation into existing water supply line, consisting of a cylindrical case 15 with cover 12, an inlet pipe 13, an outlet pipe 14, the inner tube 9, the outer tube 11, the swirling screws 1, 2, 3 with inserted permanent magnets 6, 7, 8, respectively, and a generator 16, **characterized in that** the inlet pipe (13), which is led through the cover (12), guides the water flow into the inner tube (9), where it is swirled first at the entry of the tube (9) by the right-swirling screw (1) and again at the exit of the tube (9) by the left-swirling screw (2); that in the said swirling screws (1, 2) the water is at the same time subject to magnetic fields of permanent magnets (6, 7) inserted in the closed cylinder (21) of the swirling screws (1, 2); that on a cylinder (10), which is positioned between the inner tube (9) and the outer tube (11) and which embraces the mid part of the inner tube (9), a generator (16) is attached, consisting of two symbolic symmetrical figures, having their axis of symmetry positioned at an angle of 45°; that the said first symbolic figure is a circle plane with four pairs of arcs positioned around its edge, the four right bended arcs (17) representing a right-swirling Archimedes screw and the four left bended arcs (18) representing a left-swirling Archimedes screw; that the said second symbolic figure is an archetypic symbol (19) comprising four interlaced hearts positioned so as to form a cross within an interrupted ring (20); that the water gets the imprint of a special information from the said generator (16) when the water passes the said generator (16); that the water flows out of the inner tube (9) through a funnel (24), which is inserted into the inner tube (9) by means of its cylindrical neck (23) with three longitudinal rectangular cuttings, the funnel (24) having a shape of a saucer with several round holes uniformly arranged in a circle on its bottom; that after passing the funnel (24), the water flows back towards the outlet pipe (14), where the water swirls in the right-swirling screw (3) and flows through the magnetic field of its magnet (8); that the magnets (6, 7, 8) are built-in in closed cylinders (21) of the swirling screws (1, 2, 3) and have their N pole turned towards the cone shaped cover (22).
